# EUROPÄISCHE PATENTANMELDUNG

(11) **EP 0 787 432 A1**
(43) Veröffentlichungstag der Anmeldung: **06.08.1997**
(21) Anmeldenummer: 96101990.8
(22) Anmeldetag: 12.02.1996
(51) Int. Cl.: A21D 8/06, A21D 10/02, A21D 15/04

(54) **Nahrungsmittelkonserve und Verfahren zur Herstellung eines konservierten Nahrungsmittels**

(71) Anmelder: GEBR. SCHULTE Fleischwarenfabrik, 49201 Dissen (DE)
(72) Erfinder: Pörtner, August, Dipl.-Ing., D-49214 Bad Rothenfelde (DE)
(74) Vertreter: Busse & Busse Patentanwälte

(57) **Zusammenfassung**

Die Erfindung betrifft eine Nahrungsmittelkonserve bestehend aus einem mit einer Füllung versehenen Backwerk, das in einem Verpackungsbehältnis untergebracht und wärmebehandelt ist. Dabei ist das Backwerk aus einem Teigkörper gebildet, der in seinem Innenraum die Füllung aufnimmt und der in einem verschlossenen Behältnis durch Wärmebehandlung des Verpackungsbehältnisses nach dessen Verschluß konserviert ist und eine formhaltige Struktur darbietet. Zur Herstellung der Nahrungsmittelkonserve wird roher Teig zu einem Teigkörper in Gestalt eines Napfes geformt, der Innenraum des vorgeformten Teigkörpers mit der fleischhaltigen Füllung gefüllt und Teigkörper und Füllung in einem mittels eines Deckels verschlossenen Glasbehältnis in einem Autoklaven erhitzt, bis der Teigkörper eine formhaltige Struktur annimmt.

## Beschreibung

Der Erfindung bezieht sich auf eine Nahrungsmittelkonserve gemäß dem Oberbegriff des Anspruchs 1. Sie bezieht sich ferner auf ein Verfahren zur Herstellung eines konservierten Nahrungsmittels gemäß dem Oberbegriff des Anspruchs 13.

Eine bekannte Nahrungsmittelkonserve der genannten Art ist eine englische Fleischpastete mit einer fleischhaltigen Füllung in einer geschlossenen Blätterteighülle. Zu ihrer Herstellung wird nach der Befüllung einer Rohteighülle die Pastete wärmebehandelt, wodurch der Blätterteig weitgehend ausgebacken und die Füllung dabei gegart wird. Danach wird das Produkt in einem Papier-, Papp- oder Kunststoffbehältnis verpackt und anschließend tiefgefroren. Vor dem Verzehr wird das tiefgefrorene Produkt der Verpackung entnommen und eine zeitlang erhitzt, wodurch das Produkt nicht nur auf Verzehrtemperatur gebracht, sondern der Blätterteig auch vollständig ausgebacken und die Füllung fertiggegart wird.

Es ist ferner eine Nahrungsmittelkonserve bekannt, die eine in einer Blechdose deren Hauptteil einnehmende fleischhaltige Zubereitung umfaßt, die von einer dünnen Platte aus rohem Blätterteig abgedeckt ist. Nach Verschließen der Dose wird diese in einem Autoklaven wärmebehandelt. Für die Vorbereitung zum Verzehr wird der Deckel abgenommen und die geöffnete Dose eine Zeitlang erhitzt, wodurch die Teigplatte ausgebacken und die Fleischfüllung fertiggegart wird. Die Dose ist als flache Schüssel ausgebildet, aus der das Produkt beim Verzehr mit Löffel oder Gabel entnommen werden kann. Nahrungsmittelkonserven der vorgenannten Art bilden Vollkonserven, die zum Convienence-Produktbereich gehören, da sie vor ihrem Verzehr noch einer fertigstellenden Wärmebehandlung bedürfen.

Es sind aber auch Nahrungsmittelkonserven bekannt, bei denen fleischhaltige Füllung und Backwerk nach ihrem Zusammenfügen ein verzehrfertiges Produkt bilden, z.B in Form einer ausgebackenen, ein Würstchen umschließenden Gebäckhülle. Derartige verzehrfertige Produkte gehören zu dem Snack-Produktbereich, die zumeist in einer Verpackung aus Kunststoff- oder Metall- oder Verbundfolie nach ihrer Herstellung verpackt werden, die evakuiert oder begast sein kann, um den Zeitraum der begrenzten Haltbarkeit des Produktes zu verlängern.

Die Erfindung befaßt sich mit dem Problem, eine Nahrungsmittelkonserve der genannten Art und ein Verfahren zur Herstellung einer solchen zu schaffen, die auch bei Ausbildung als Vollkonserve bei Umgebungstemperatur aufbewahrt und Kaufinteressenten präsentiert werden kann und bei der das Produkt dem Verpackungsbehältnis zu Verzehrzwecken vor oder nach einer aufbereitenden Wärmebehandlung als Einheit entnommen und serviert werden kann. Die Herstellung soll dabei einfach sein und ein zum Zeitpunkt des Verzehrs rösches Backwerk erbringen.

Die Erfindung löst dieses Problem durch eine Nahrungsmittelkonserve gemäß Anspruch 1 und ein Verfahren zur Herstellung eines konservierten Nahrungsmittels gemäß Anspruch 13. Hinsichtlich wesentlicher weiterer Ausgestaltungen wird auf die Ansprüche 2 bis 12 bzw. 14 bis 17 verwiesen.

Die erfindungsgemäße Nahrungsmittelkonserve, deren Backwerk vorzugsweise aus einem Quarkteig gebildet wird und deren Füllung aus einer herzhaften, insbesondere fleischhaltigen, garfähigen und -bedürftigen Zubereitung mit im Bedarfsfalle hohem Feuchtigkeitsanteil bestehen kann, bildet nach einer Wärmebehandlung des Produktes in dem verschlossenen Behältnis eine Vollkonserve, die in Verkaufs- und Vorratsregalen unter Umgebungstemperatur aufbewahrt werden kann, wobei das Verpackungsbehältnis bei durchsichtiger Ausführung eine Betrachtung des Produktes ermöglicht. Neben dem dadurch vom Produkt ausgehenden Kaufanreiz eröffnet die Betrachtbarkeit auch die Möglichkeit zur visuellen Inspektion des Produkts zu Kontrollzwecken.

Der nach der Wärmebehandlung formhaltige, zumindest ein Vorbackwerk bildende Teigkörper bildet mit seiner Füllung, die von einem mitverzehrbaren Überzug, einem sogenannten Topping, abgedeckt sein kann, eine Einheit, die innerhalb des geschlossenen oder bereits geöffneten Verpackungsbehältnisses durch einen Erwärmungsvorgang verzehrfertig gemacht und anschließend als Einheit entnommen und serviert werden kann. Die Einheit kann aber auch vor einer die Verzehrfertigkeit herbeiführenden, aufbereitenden Wärmebehandlung (Backen ) als Einheit aus dem Verpackungsbehältnis entnommen und im Backofen aufbereitet und anschließend zum Verzehr serviert werden.

Das Backwerk bildet in jedem Falle ein formhaltiges Behältnis für die Füllung, das nicht nur eine einfache Handhabung des Nahrungsmittels nach der Entnahme aus dem Verpackungsbehältnis ermöglicht, sondern der Nahrungsmitteleinheit auch ein optisch ansprechendes, appetitanregendes Erscheinungsbild vermittelt.

Das Verpackungsbehältnis bildet bevorzugt die Verkaufsverpackung, und das Nahrungsmittel in dieser ist bevorzugt vollkonserviert, und zwar unabhängig davon, ob das Backwerk ein Vorbackwerk bildet und vor dem Verzehr noch einer aufbereitenden Wärmebehandlung bedarf, oder ob das Backwerk ein unter Einschluß der Füllung unmittelbar verzehrbereites Fertigbackwerk bildet.

Die Formung des rohen Teiges zu einem bevorzugt napfförmigen Teigkörper kann innerhalb des Verpackungsbehältnisses dadurch erfolgen, daß ein in das Verpackungsbehältnis eingebrachtes Stück rohen Teigs mit Hilfe eines Formwerkzeugs innenseitig und oberseitig geformt und dabei gleichzeitig außenseitig an die Innenfläche des Glasbehältnisses angelegt wird. In diesem Falle bildet das Verpackungsbehältnis zugleich ein Formnest für die Außenformung des Teigkörpers. Der Teigkörper kann aber auch vor dem Einsetzen in das Verpackungsbehältnis geformt und in vorgeformtem, gegebenenfalls bereits mit der Füllung versehenen Zustand in das Verpackungsbehältnis eingesetzt werden, wobei der Teigkörper eine mit dem Innenraum des Verpackungsbehältnisses übereinstimmende Außenform haben oder bei der Wärmebehandlung einnehmen kann.

Nach dem Befüllen des Innenraumes des Teigkörpers und gegebenenfalls Abdecken der Füllung an der Oberseite durch ein Topping wird das Verpackungsbehältnis, z.B. durch einen Deckel, verschlossen und einem Autoklaven zugeführt. Durch die Wärmebehandlung im Autoklaven wird nicht nur der Teigkörper zumindest zu einem Vorbackwerk strukturiert, sondern auch die Füllung gart, die in ihrer Zubereitung bevorzugt derart auf das Backwerk abgestimmt ist, das bei Verzehrfertigkeit des Backwerkes auch die Füllung verzehrfertig gegart ist.

Als Füllung kommen insbesondere Fleischwaren, Fleischzubereitungen, z.B. Hackfleisch mit Zutaten, Zubereitungen aus Fleisch und/oder Fisch und/oder Gemüse und/oder Obst, auch in Soßen, in Betracht.

Bevorzugt wird die Wärmebehandlung im Autoklaven in fraktionierter Form vorgenommen, beispielsweise in vier Stufen, wobei die Temperatur in der Endstufe der Wärmebehandlung vorteilhaft im Bereich zwischen 100° und 130°, vorzugsweise etwa 108° bis 115°, liegt. Die Wärmebehandlungszeit bewegt sich in der Regel im Bereich von 2-3 Stunden, und an die Endstufe der Wärmebehandlung schließt sich eine Kühlungphase an. Diese kann einen Zeitraum von 30-60 Minuten in Anspruch nehmen, wenn die Kühlung beispielsweise mit Wasser von annähernd Umgebungstemperatur durchgeführt wird.

## Patentansprüche

1. Nahrungsmittelkonserve, bestehend aus einem mit einer Füllung versehenen Backwerk, das in einem Verpackungsbehältnis untergebracht und wärmebehandelt ist, **dadurch gekennzeichnet**, daß das Backwerk aus einem Teigkörper gebildet ist, der in seinem Innenraum die Füllung aufnimmt und/oder in einem verschlossenen Behältnis durch Wärmebehandlung des Verpackungsbehältnisses nach dessen Verschluß konserviert ist und eine formhaltige Struktur darbietet.

2. Nahrungsmittelkonserve nach Anspruch 1, **dadurch gekennzeichnet**, daß das im geschlossenen Verpackungsbehältnis wärmebehandelte Backwerk die Struktur eines Vorbackwerks aufweist.

3. Nahrungsmittelkonserve nach Anspruch 1, **dadurch gekennzeichnet**, daß das im geschlossenen Verpackungsbehältnis wärmebehandelte Backwerk die Struktur eines unmittelbar verzehrbereiten Fertigbackwerks aufweist.

4. Nahrungsmittelkonserve nach einem der Ansprüche 1 bis 3, **dadurch gekennzeichnet**, daß das Backwerk von einem Quarkteig gebildet ist.

5. Nahrungsmittelkonserve nach einem der Ansprüche 1 bis 4, **dadurch gekennzeichnet**, daß die fleischhaltige Füllung von einem mitverzehrbaren Überzug abgedeckt ist.

6. Nahrungsmittelkonserve nach einem der Ansprüche 1 bis 5, **dadurch gekennzeichnet**, daß das Glasbehältnis die Verkaufsverpackung bildet.

7. Nahrungsmittelkonserve nach einem der Ansprüche 1 bis 6, **dadurch gekennzeichnet**, daß sie eine Vollkonserve bildet.

8. Nahrungsmittelkonserve nach einem der Ansprüche 1 bis 7, **dadurch gekennzeichnet**, daß der Teigkörper die Füllung allseits oder zumindest unterseitig und seitlich umschließt.

9. Nahrungsmittelkonserve nach Anspruch 8, **dadurch gekennzeichnet**, daß der Teigkörper napfförmig ausgebildet ist.

10. Nahrungsmittelkonserve nach einem der Ansprüche 1 bis 9, **dadurch gekennzeichnet**, daß das Verpackungsbehältnis aus Glas, Metall, Kunststoff oder Kombinationen aus diesen besteht.

11. Nahrungsmittelkonserve nach einem der Ansprüche 1 bis 10, **dadurch gekennzeichnet**, daß das Verpackungsbehältnis formsteif ausgebildet und durch einen Deckel verschlossen ist.

12. Nahrungsmittelkonserve nach einem der Ansprüche 1 bis 10, **dadurch gekennzeichnet**, daß das Verpackungsbehältnis als Weichverpackung ausgebildet ist.

13. Verfahren zur Herstellung eines konservierten, aus einem Backwerk und einer fleischhaltigen Füllung bestehenden und in einem Verpackungsbehältnis untergebrachten Nahrungsmittel, das nach Zusammenfügen seiner Bestandteile einer Wärmebehandlung unterzogen wird, **dadurch gekennzeichnet**, daß roher Teig zu einem Teigkörper in Gestalt eines Napfes geformt wird, der Innenraum des vorgeformten Teigkörpers mit der fleischhaltigen Füllung gefüllt wird und Teigkörper und Füllung in einem mittels eines Deckels verschlossenen Glasbehältnis in einem Autoklaven erhitzt werden, bis der Teigkörper eine formhaltige Struktur annimmt.

14. Verfahren nach Anspruch 13, **dadurch gekennzeichnet**, daß die Wärmebehandlung bei Erreichen einer Vorbackstruktur im Teigkörper beendet wird.

15. Verfahren nach Anspruch 13, **dadurch gekennzeichnet**, daß die Wärmebehandlung bis zur Umwandlung des Teigkörpers in ein verzehrbereites Fertigbackwerk durchgeführt wird.

16. Verfahren nach einem der Ansprüche 13 bis 15, **dadurch gekennzeichnet**, daß die Wärmebehandlung in fraktionierter Form vorgenommen wird.

17. Verfahren nach einem der Ansprüche 13 bis 16, **dadurch gekennzeichnet**, daß die Temperatur in der Endstufe der Wärmebehandlung zwischen 100° und 130°, vorzugsweise etwa 108° bis 115°, beträgt.
